(19) Europäisches Patentamt
European Patent Office
Office européen des brevets

(11) **EP 2 466 277 A1**

(12) **EUROPEAN PATENT APPLICATION**

(43) Date of publication:
**20.06.2012 Bulletin 2012/25**

(51) Int Cl.:
*G01F 3/22* (2006.01)  *G01F 15/06* (2006.01)
*G01F 15/075* (2006.01)  *G08C 17/02* (2006.01)

(21) Application number: **11004030.0**

(22) Date of filing: **16.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.12.2010 IT TO20101006**

(71) Applicant: **Edinform SPA**
**73100 Lecce (IT)**

(72) Inventor: **Palese, Luigi Salvatore**
**73 Felline Alliste (LE) (IT)**

(74) Representative: **Bruni, Giovanni**
**Laforgia, Bruni & Partners**
**Corso Duca degli Abruzzi, 78**
**10129 Torino (IT)**

(54) **Remotely readable and controllable gas metering system**

(57) Integrated system for tele-readable and tele-controllable metering gas pipe networks, comprising at least a local metering module and at least a service centre for tele-reading and processing data coming from said metering modules; said metering module comprising in turn a measuring chamber, a temperature sensor, a solenoid valve, a radio RF (radio frequency) module, a supply battery and a control unit and being characterized by an integrated software platform which maximizes the processing and storage activities on the service centre thus saving the battery consumption supplying said local metering modules.

Fig.3

EP 2 466 277 A1

**Description**

The present invention relates to an integrated system for metering gas consumption and for managing and evaluating the service efficiency in supplying gas.

The integrated platform belongs to the known advanced metering systems, as AMI (Advanced Metering Infrastructure), and is made up of an advanced metering system, a system for tele-reading and tele-managing the measuring apparatuses and an integrated software platform. Each apparatus can be used autonomously and the integration of the portions provides an innovative push in the activation of an integrated system for programming, managing and evaluating the service efficiency in supplying gas and a development process and continuous improvement of the same performance.

The advanced metering system for the gas pipe networks object of the present invention comprises a measuring chamber with deformable walls, a temperature sensor, a solenoid valve, a radio RF (radio frequency) module and a control unit. The metering system can be remote-read and controlled thanks to the radio RF module provided therein which puts it in communication with a tele-reading and tele-managing system. If needed (gas leakage, arrearage) the solenoid valve can be closed to switch off the gas supply and its opening can be remote-enabled (this procedure, for safety reasons, is to be ended manually, with the user pressing a button). The unit control meters the gas passed through the measuring chamber and, considering the gas temperature, brings again the volume measure to a reference standard of pressure and temperature (atmospheric pressure and temperature 15°C). The gas volume metering is completely electronic by means of the control unit, which uses a gray code whose encoder is integral with the driving shaft of the measuring chamber. Therefore object of the present invention is an integrated system for tele-readable and tele-controllable metering of gas pipe networks, with temperature correction and provided with remote-actuatable solenoid valve, supported by an integrated software platform which allows to manage and evaluate the gas supply service performances.

In the field of gas metering, the European and national laws have the following aims:

- creating the necessary functional and technological conditions to allow the introduction of mechanisms for the development of a market system of natural gas in order to support the definition of the regulated market and of the new balancing service;
- making the solution of possible inefficiencies and discriminations easier by improving the metering process of the natural gas, withdrawn from the final users, as well as the technological innovation of measuring systems;
- improving the quality of measuring, selling and distributing service of the natural gas, ensuring the same functional and performance levels irrespective of the subject responsible for the measuring system, and favouring the consumption awareness.

The object of the present invention solves the above-described technical problems and the innovation is in that the same invention, which is a result of a long time of research, development and laboratory experimentation, provides the maximum result in building the managing and supporting output to decisions (DSS) by balancing the information repositories and the processing functions on the single components, shifting however, the most processing and storage activity on the service centre; thus saving the battery consumption which supply the metering system with remarkable advantages in the supply component duration and therefore remarkable economic advantages in the management, thus ensuring as well results and functionalities extraordinarily superior to the common metering and managing systems for utilities. The metering system for the gas pipe networks is an integrated system, as defined in claim 1, for metering gas pipe networks, comprising a measuring chamber with deformable walls, a temperature sensor, a solenoid valve, a radio RF (radio frequency) module and a control unit, the whole supported by an integrated software platform which allows to manage and evaluate the performance of the gas utilities.

These and other advantages will be highlighted in the following detailed description of the invention which refers specifically to tables 1-2, figures 1 to 3, which show a preferred embodiment of the present invention, which is absolutely non-limiting. In particular:

Figure 1 shows the keyed disc, made up of an acquisition plate (A), light sources (B), photo-elements (C), an axis (D), a code-disc (E);
Figure 2 shows the scheme of the principal portions making up the metering system. In particular there are shown: the connection to the temperature sensor (1), the mechanic driving shaft (2), the setting gearing (3), the impulses output for the consumption (4), the connection to the solenoid valve (5), the solenoid valve (6), the measuring element (7), the electronic unit (8), the input (9), the output (10) and the housing (11);
Figure 3 shows the schematization of the tele-reading network.

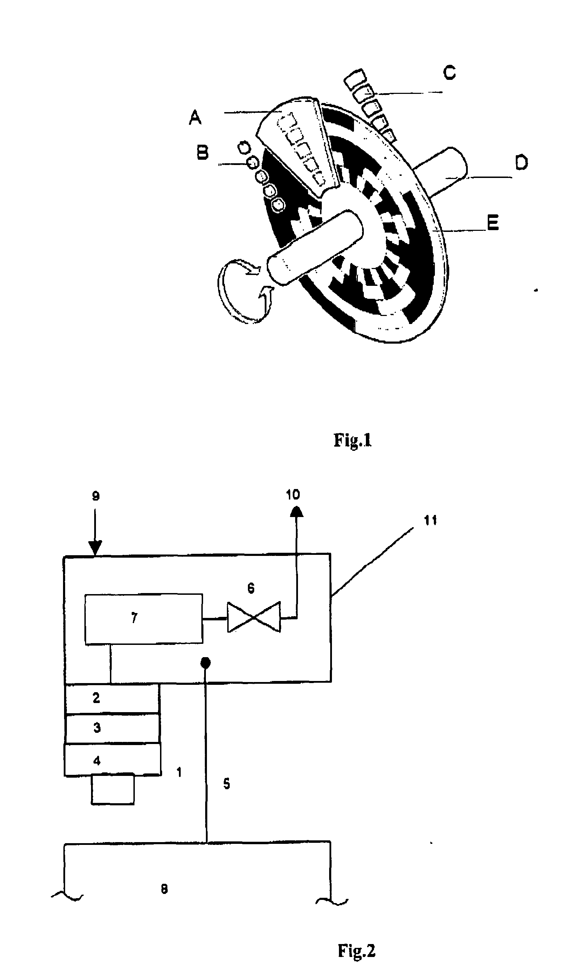

The system object of the present invention overcomes the problems relating to the assembly of mechanic portions and the configuration of the automatic devices solving them at industrial level. Moreover, it guarantees also a pre-testing step on a testing ground and, as a consequence, provides a yet functioning system both for the single portions thereof, and for the completely assembled system. In this way it is obtained a reduction in the installation costs and laying times, an increase in the system reliability thus solving the root of the problems relating to the system configurations and to a greater managing reliability. The control unit is provided with resources to manage suitable parameters, as for example inputs and outputs for temperature measuring devices, to set the solenoid closing and to enable its opening, as well as connections to the radio module and other devices useful to manage and transmit data. For data processing, the control unit has to use its potentiality and resources, as for example inner resources, messaging systems, logic formulas, traces of values activity and historical recording, inner variables (physical or virtual), telex modes, terminal modes, mathematical, logic and relational operators. The temperature measuring occurs by means of a digital sensor (12C, TWI) with 0.0625°C resolution, accuracy up to 0.5°C. The measuring system is of deformable membrane type, of the G4 type, measuring range 0.04 $m^3$/h - 6 $m^3$/h; the sealing portion of the measuring device is made up of a steel or aluminum sheet envelope, with connections for parallel supply manifolds and delivery, containing the measuring system and the solenoid valve. The connections are of male type without sealing on the thread, with coupling of G 1"1/4 type and 110 mm pitch. The transmission system of the consumption value between the inner side of the metering device and the computing and display module is of electronic type and the gas flow direction can be individuated through a well-shown arrow provided, of indelible and non-removable type, realized by moulding on the steel envelope. The metering device is provided with a mechanism which avoids its functioning in case of gas flow in opposite direction to the one expected. The incremental encoder detects the angular shifts of the axis integral with the driving shaft by means of a keyed disc on the axis of rotation (fig. 2). When the disc rotates, at the photo-sensor output there is an impulse train, one for each hole passing the photo-electronic finish line. By counting the impulses, the shifting angle of the disc can be provided; the angular resolution is given by 360°/N (N being the number of the hol.es on the disc). The measure of the rotation speed is obtained by counting the impulses on a given basis of time; if f is the frequency of the generated signal and N is the number of the holes, the rotation speed n, expressed as revolutions/s, is given by:

$$N = f/N[\text{revolutions/s}]$$

If N is equal to 60, the frequency corresponds directly to the revolutions per minute. The encoder (which measures the speed rotation) has an output providing directly a digital processing; does not need to be set since the relation frequency/speed depends only on the number of holes and it is therefore fixed during its realization, and for the same reason, its characteristics of transduction are absolutely stable in time; finally it is mechanically simple to build it so that it is provided with very limited friction and moments of inertia, and the system to which it is connected is not loaded mechanically (principal driving shaft). In the gas utility bills, other two references are indicated:

- PCS which represents the calorific power of a gas cubic meter in standard conditions and serves to convert the gas consumption, evaluated in standard cubic meters, in energy-valued gas consumption (the physical quantity for the final users); the PCS is a parameter on which the energy supplied to the user by means of a cubic meter of gas depends; the PCS is therefore a common parameter for each service of the natural gas system;
- factor C of conversion of the volumes to bring the volumes from the measured conditions again to the standard conditions.

The conversion factor C is needed since the volume of an equal quantity of gas depends on the pressure and temperature to which such quantity is delivered. The same gas quantity (and as a consequence the same energy content) delivered in a mountain area would take up a volume different from the one taken up if it is delivered in a seaside area; in order to make the final user pay the same sum it is needed, in both cases, to bring the volume measure again to a reference standard of pressure and temperature (atmospheric pressure and temperature of 15°C). The inventive system is provided with a gas temperature measuring device and an inner algorithm which brings the volume again to a reference standard of pressure and temperature, as above-stated. The computing unit and the electronic display, contained in a rigid plastic envelope which is transparent in polycarbonate for the portion facing the mechanic device for consumption display, results outside the sealing envelope of the metering device. Among its characteristics: an LCD display with 1 string of 10 characters, computing possibility of the gas volume with double-scale measure update ($m^3$ or liters) with possibility of shift from the one to the other one automatically or by outer control. The measuring device is provided with solenoid valve which has a bi-stable sealing member integrated in the sealing envelope of the measuring device. The aim of the solenoid valve is to switch off the gas flow when the piloting signal coming from an outer gas sensor (gas leakage) is on; during maintenance by local-actuating the suitable buttons or, remotely, depending on the policy adopted by the service provider after anomalous behavior of the user (arrearage, pre-payed etc...). The solenoid valve is integrated in the sealing envelope of the measuring device and its electric terminations are provided for the needed connections using a fairlead. Both the opening and closing procedures are controlled by software rules implemented inside the firmware of the electronic unit. The solenoid valve opening and closing have to be carried out both remotely by the service centre and locally by means of buttons. The possible conditions are described in table 2.

|  | remotely | locally |  |
|---|---|---|---|
| closing | always actuatable | always actuatable |  |
| opening | always actuatable | subject to authorization | closing upon anti-fraud alarm |
|  |  |  | arrearage |
|  |  | autonomously | maintenance |
|  |  |  | gas leakage alarm |

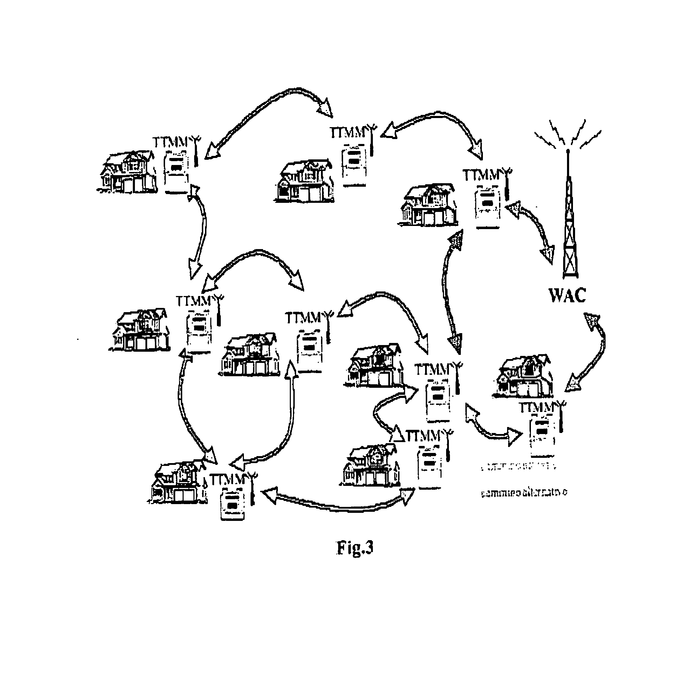

For the solenoid valve opening and closing it is needed to apply a supply voltage not lower than 3V, and a piloting current not lower than the highest one of 300 mA. The solenoid valve supply is provided by means of four 1.5 V alkaline batteries, housed inside a compartment in the metering device case. Connectors and fairleads are used in order to make the cables pass through the sealed box. Each input is connected to the electronic control unit by means of isolated clamps and connectors and is protected against the over-voltages or disturbances by means of suitable electronic devices mounted inside the sealed container. The inventive system is advantageous in that it is made up of only one high technological element which makes the step of laying easier, solves the problems relating to the compatibility of each single element and simplifies the consequent maintenance. The connections between the data transmission system and the electronic apparatuses are provided by means of insertion and sealing connectors with mechanic block. The control unit apt to data transmission and to solenoid valve moving is provided with analogical inputs and digital inputs, which represent the majority of transducers used, with respective alarm controls and protection thresholds. For tele-reading and tele-managing it is used the RF transmission protocol on mesh architecture net, in order to allow an always-on functioning mode. In the initialization of the tele-reading and tele-managing system, the data relating to the composition of the single peripheral device have to be input, and these, for example in the case of telephone network service, are: the own telephone line number and other numbers used by the peripheral devices to transmit automatically the alarm condition (gas leakage), for example mobile phone numbers of emergency companies. In order to detect the digital signals available in the standard configuration, in the program of the central system, there have to be input the description, the alarm condition (if High or Low activated), the signal enabling, the alarm condition and the time of alarm state detection. The key element of the tele-reading and tele-managing system of the measuring apparatuses is the area concentrator (Wide Area Concentrator), which is the aggregation point of the information direct or coming from the RF modules situated inside the metering system. The concentrator represents also an interface towards the extended geographic net (WAN). As shown in figure 3, the system of the tele-reading and tele-managing net results to be quite complex. Therefore, it was developed a protocol provided with a smart algorithm which coordinates the data processing and communication activities (radio frequency) in an highly efficient mode so that the whole utilization ratio (duty ratio) of the trans-receiver is always at minimum, thus producing a significant reduction of the current consumption. With this new algorithm for consumption managing, a TMM in transmission does not use on average more than 23 mA current. Depending on the functioning cycle (duty cycle) TMM can function with a 3.6 V lithium battery for many years. Two key functions implemented in the net protocol of RF devices, provided on the measuring apparatuses, are the following:

1) point-multipoint communication mode
2) "Rendez-vous" mode functioning

The protocol supports a point-multipoint mode which allows to realize a sort of "mesh" network where each device can, potentially, dialogue with all those provided in the one's own covering area. This function is supported by a robust routing algorithm, which selects among the different devices (depending on a criterion based on the channel quality evaluation and on the signal power) the one with which to communicate. It is thus possible to reach a remarkable transmission distance, to save current and at the same time to create a robust net. The current saving introduced by the choice of the net architecture is however not sufficient to ensure a duration of the devices for many years; for this reason there is introduced the second characteristic: the "Rendez-vous" mode functionning. Such mode consists in switching on the devices in exact and pre-programmed (and reprogrammable) time slots, during which the acquisition of the information occurs, and in others in which the information transmission occurs. The net functioning only in exact time slots is however a delicate point since these ones are sensibly limited (in order of some minutes owing to the need to make the system last), since the failed time slot sharing by each device can nullify the communication flux (that is "loose" a net portion). As for the hardware, such need is solved introducing an RTC (Real Time Clock) and, from a firmware point of view, implementing a function in the communication protocol for the synchronization of each RTC, on the different boards, at each switching on of the system. It is thus introduced a second and stronger saving mode of electric current which together with the first one ensures to the devices a long duration between 7 and 10 years, depending on the operative usage modes (number of switching on and respective duration). Moreover the protocol supports:

- scalability to allow easily the introduction or cancellation of a new node, thus avoiding to intervene (manually) on adjacent nodes,
- flexibility to allow to vary dynamically the path in case of problems (disturbance repeated on an path established as preferred) or to realize a new better path upon the introduction of a new node.

The software platform (UPMS = Untilities Performance Management System) is characterized by the following elements considered in order to make the same absolutely suitable to give coherence to the whole system described:

a) adapting to the state of the art of the single user companies in order to limit the installation or managing costs and to safeguard of the previous investments (no invasiveness and gradual introduction of the considered technologies).
b) favouring the realization, also gradually, of a system characterized by a structural organicity and by an holistic version referring to the whole structure and by the relation of this one with the stakeholder community;
c) maximizing the utilization of the apparatuses potentialities (of measure and rf) in terms of smart functions and information building about consumptions and development of the distribution network technologies;
d) allowing each needed, applicative, organizational, concerning configuration etc... evolution, in order to activate a process which in evaluating the performance develops improvement initiatives and continuous innovation.

For the above-described considerations, the UPMS platform:

a) was realized as a completely and natively web based platform and structured as Componed-based Aplication Framework; therefore it is provided with all the paradigms to make the management flexible and reactive to the needs in order to satisfy each rising need both of adaptative and open-ended nature;
b) only open standards have been used;
c) is made up of a SOA architecture (Service Oriented Architecture),
d) the maximum safety criteria have been used;
e) is configured with a fine and atomic granularity modular architecture;
f) allows flat inter-operability and therefore minium invasiveness, in order to enhance the utilization of the potentialities of the measuring or acquisition apparatuses of other information of the net with the immediate utilization in the managing systems of the service and of the same utility.

Yet, in order to enhance the utilizability of the whole advanced metering platform, eliminating every possible technological barrier of compatibility the sw structure is

- OS Agnostic (Operating System. Agnostic)
- AS Agnostic (Application Server Agnostic)
- RDBM Agnostic (Relational Database Management System Agnostic)

with regards to the applicative contents, the integrated software platform is structured as follows:

1. the CORE DATA MODEL (CDM) represents the open base core of the frame-work to the extension to satisfy each information need in relation to the different complexity, to the different organization and to the different reality of the information entities and of the different thematic and functional needs. The sw structure manages all the personal data information about subjects, objects and structures; the information structured in specific directories of administrative proceedings; technical-operative processes; elementary or complex activities etc.... The subjects comprise the physical and juridical persons; the associations juridically relevant in terms of rights and obligations: subjects defined and recognized by the law (groups of stakeholders; committees etc...); the objects refer to machines; plants; equipments relevant in the identification of produced information; measuring apparatuses (metering devices) or apparatuses of condition detection (control means and functioning monitoring); buildings etc.... The structures are characterized by the coexistence of more subjects, objects or sub-structures (for example shopping malls;

industrial or handicraft activities etc...). The module represents a generalized manager of its own informative entities, the concentration and not-redundancy thereof and the structure of the whole framework allowing to obtain specific applications to satisfy emerging needs of any fields, operative structure or any other field or business mode.

2. Activity Management Infrastructure (AM Infrastructure) manages the programming, planning, managing, reporting and controlling of the activities, processes, working plans and administrative proceedings classified in the directories managed by the Core Data Model in correlation to the subjects with rights and obligations managed by the same;

3. Document Management Infrastructure, provided with a documents protocollation and classification system, allows the digitalized management of the whole documental property;

4. Advanced Collaboration Suite: it is an infrastructure based on SOA type architecture integrated with the remaining functions apt to support each collaboration form between structures/offices/services and respective operators or operative components distributed on the territory; allowing, among other things, to develop the knowledge and to share the good practices. The platform allows to realize collaboration forms with and between the teams and the working groups; with the outer stakeholders and between them and homogeneous user groups.

5. Reporting Structure, datawarehousing Business intelligence and Data Mining, to create knowledge and decision making supports and to obtain useful indications to evaluate the development of the performance, of the profiles of single and collective utility to define thematic and region maps of the consumption of the simulations about the needs etc... supplying data to the specific geo-referential infrastructure.

6. Maps Module gives the platform UPMS the characteristics of a GIS solution, that is the characteristics of software platform based on geo-referred data. Maps integrates a geographic base on which all the subjects, objects, structures and activities managed in the system knowledge base are geo-referred (technological nets, measuring devices, data transmission apparatuses, etc...). Maps offers the user a rich set of functionalities to navigate in and consult the map, to manage the contents of the maps, to make research and spatial analysis, to print and to interchange data.

The structure of the whole solution is characterized by a gradation of the value of the information usage, which even if is characterized by granularity and very fine atomism, always and natively maintains the integrity of the identification profiles of the apparatuses and of the final subjects, of typological and topological coordinates etc.... To the hardware apparatuses for the data consumption detection and data managing was attributed the function of determining the production, acquisition and transcription of the most needed data with the minimum indispensable functions which characterize the intelligence of the whole system; to the software platform was attributed the task to store the processed and classified data; to the realization of each typological and topological information; to satisfy the needs of the users and of the other inner and outer stakeholders interested in controlling the whole system.

## Claims

1. Integrated system for tele-readable and telecontrollable metering gas pipe networks, comprising at least a local metering module and at least a service centre for tele-reading and processing data coming from said metering modules; said metering module comprising in turn a measuring chamber, a temperature sensor, a solenoid valve, a radio RF (radio frequency) module, a supply battery and a control unit and being **characterized by** an integrated software platform which maximizes the processing and storage activities on the service centre thus saving the battery consumption supplying said local metering modules.

2. Integrated system according to claim 1, wherein said software platform supports a point-to-multipoint mode and a "Rendez-vous" mode.

3. Integrated system according to claim 2, wherein said point-to-multipoint mode optimizes the communication path between the various metering modules.

4. Integrated system according to claim 2, wherein said "Rendez-Vous" mode consists in switching on the metering modules according to precise and programmable time sections.

5. Integrated system according to claim 1, wherein said measuring chamber is made up of deformable walls.

6. Integrated system according to claim 5, wherein the measuring chamber is of G4 type, measuring range 0.04 $m^3/h$ - 6 $m^3/h$.

7. Integrated system according to claim 1, wherein said temperature sensor is a digital sensor having a resolution of 0.0625°C with accuracy up to 0.5°C.

8. Integrated system according to any one of the preceding claims, wherein the metering device is provided with a mechanism which avoids its functioning in case of gas flow in the opposite direction to the expected one.

9. Integrated system according to claim 1, wherein said solenoid valve is provided with a bi-stable sealing element integrated in the sealing case of the measuring device apt to interrupt the gas flow in presence of the control signal from an outer gas sensor.

10. Integrated system according to claim 6, wherein the solenoid valve opening and closing is provided both in remote mode by the service centre and in local mode by means of push buttons.

**Fig.1**

**Fig.2**

Fig.3

Europäisches
Patentamt

European
Patent Office

Office européen
des brevets

# EUROPEAN SEARCH REPORT

Application Number

EP 11 00 4030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CASCETTA F ET AL: "THE FUTURE DOMESTIC GAS METER: REVIEW OF CURRENT DEVELOPMENTS", MEASUREMENT, INSTITUTE OF MEASUREMENT AND CONTROL. LONDON, GB, vol. 13, no. 2, 1 April 1994 (1994-04-01), pages 129-145, XP000446371, ISSN: 0263-2241, DOI: DOI:10.1016/0263-2241(94)90006-X * abstract; figures 1,2 * * page 130, left-hand column, paragraph 3 * * page 131 - page 133 * | 1-7,9,10 | INV. G01F3/22 G01F15/06 G01F15/075 G08C17/02 |
| X | US 2008/150750 A1 (PARRIS EARL H [US] ET AL) 26 June 2008 (2008-06-26) * paragraph [0159] - paragraph [0232]; figure 15 * | 1-4,7-10 | |
| A | WO 2004/090832 A1 (BLUEMAX COMM CO LTD [KR]; LEE YOUNG-SIK [KR]) 21 October 2004 (2004-10-21) * page 1, line 12 - line 14 * * page 4, line 15 - page 5, line 22 * * page 6, line 18 - page 7, line 9 * * page 13, line 4 - page 16, line 19; figures 3,4,10-12 * | 1-4 | TECHNICAL FIELDS SEARCHED (IPC) G01F G08C |
| A | GB 2 344 672 A (BRITISH GAS PLC [GB]) 14 June 2000 (2000-06-14) * page 5, last paragraph - page 6, paragraph 4 * * page 8, last paragraph - page 11, paragraph 1; figures 1-3 * | 1,9,10 | |

-/--

The present search report has been drawn up for all claims

| Place of search | Date of completion of the search | Examiner |
|---|---|---|
| The Hague | 11 August 2011 | Rambaud, Dilek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 11 00 4030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 376 074 A2 (NUOVO PIGNONE SPA [IT] DEG ITALIA S P A [IT]) 2 January 2004 (2004-01-02) * paragraph [0018] - paragraph [0072]; figures 1-3 * | 1-5,9,10 | |
| A | EP 1 837 633 A1 (HYDROMETER GMBH [DE]) 26 September 2007 (2007-09-26) * paragraph [0015] - paragraph [0020]; figure 1 * | 1,3 | |
| A | US 2008/288933 A1 (BUDMIGER THOMAS [CH] ET AL) 20 November 2008 (2008-11-20) * paragraph [0008]; figure 1 * | 1 | |
| A | US 2007/053053 A1 (MOSKOWITZ JAY [US]) 8 March 2007 (2007-03-08) * paragraph [0059] - paragraph [0065]; figures 3,8 * | 3 | |
| | | | TECHNICAL FIELDS SEARCHED (IPC) |

The present search report has been drawn up for all claims

| Place of search | Date of completion of the search | Examiner |
|---|---|---|
| The Hague | 11 August 2011 | Rambaud, Dilek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 00 4030

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2011

| Patent document cited in search report | | Publication date | Patent family member(s) | | Publication date |
|---|---|---|---|---|---|
| US 2008150750 | A1 | 26-06-2008 | NONE | | |
| WO 2004090832 | A1 | 21-10-2004 | NONE | | |
| GB 2344672 | A | 14-06-2000 | AU | 1666600 A | 26-06-2000 |
| | | | BR | 9916061 A | 04-09-2001 |
| | | | CA | 2354568 A1 | 15-06-2000 |
| | | | EP | 1141659 A1 | 10-10-2001 |
| | | | WO | 0034745 A1 | 15-06-2000 |
| | | | JP | 2002531857 A | 24-09-2002 |
| EP 1376074 | A2 | 02-01-2004 | IT | MI20021421 A1 | 29-12-2003 |
| EP 1837633 | A1 | 26-09-2007 | DE | 102006013610 A1 | 27-09-2007 |
| US 2008288933 | A1 | 20-11-2008 | DE | 102007021099 A1 | 13-11-2008 |
| | | | EP | 2150781 A1 | 10-02-2010 |
| | | | WO | 2008135397 A1 | 13-11-2008 |
| US 2007053053 | A1 | 08-03-2007 | US | 2010308207 A1 | 09-12-2010 |
| | | | US | 2010302624 A1 | 02-12-2010 |

EPO FORM P0459

For more details about this annex : see Official Journal of the European Patent Office, No. 12/82